## Europäisches Patentamt
## European Patent Office
## Office européen des brevets

(19)

(11) Numéro de publication: **0 238 767**
**B1**

(12)

# FASCICULE DE BREVET EUROPEEN

(45) Date de publication du fascicule du brevet:
**14.03.90**

(51) Int. Cl.⁴: **G21C 7/10**

(21) Numéro de dépôt: **86402848.5**

(22) Date de dépôt: **17.12.86**

(54) **Assemblage d'une bague de guidage amovible et verrouillable sur une plaque et son application à un tube de guidage de réacteur nucléaire.**

(30) Priorité: **24.01.86 FR 8601040**

(43) Date de publication de la demande:
**30.09.87 Bulletin 87/40**

(45) Mention de la délivrance du brevet:
**14.03.90 Bulletin 90/11**

(84) Etats contractants désignés:
**BE CH DE ES LI SE**

(56) Documents cités:
**EP-A- 0 133 173**
**DE-A- 2 428 646**
**DE-B- 1 163 084**

(73) Titulaire: **FRAMATOME, Tour Fiat 1, Place de la Coupole,**
**F-92400 Courbevoie(FR)**

(72) Inventeur: **Coussau, Jean, 1, rue Gossec,**
**F-75012 Paris(FR)**

(74) Mandataire: **Moncheny, Michel et al, c/o Cabinet**
**Lavoix 2 Place d'Estienne d'Orves, F-75441 Paris**
**Cedex 09(FR)**

ACTORUM AG

# Description

L'invention concerne un assemblage d'une bague de guidage sur une plaque étant la bague de guidage amovible et verrouillable dans une ouverture traversant ladite plaque et plus particulièrement une bague de guidage associée à un tube de guidage d'un réacteur nucléaire.

Dans les réacteurs nucléaires comportant des barres de commande de puissance et d'arrêt, il est connu d'assurer à l'aide de tubes, non seulement le guidage des barres en forme de grappes en elles-mêmes, mais aussi le guidage de l'arbre reliant la grappe aux mécanismes de commande de translation des barres. Cet arbre, appelé prolongateur, est centré et guidé dans un tube disposé dans l'espace compris entre les tubes de guidage de grappes et la paroi de l'enceinte portant les mécanismes de déplacement des barres de commande.

A la partie terminale du tube, est disposée, de manière connue, une bague assurant d'une part le guidage du prolongateur et d'autre part la limitation du débit du réfrigérant ayant traversé le coeur du réacteur nucléaire. Le débit de réfrigérant est ainsi amené à s'écouler par les ouvertures prévues pour son passage, dans les tubes de guidage de grappes.

De plus, lors des opérations de déchargement et de rechargement du coeur du réacteur, la bague associée au tube de guidage permet un guidage du prolongateur correspondant, de façon que, lors de la descente du couvercle de la cuve, ce prolongateur puisse pénétrer dans le passage correspondant prévu dans le couvercle.

Enfin, cette bague doit être amovible afin de permettre d'effectuer les opérations de maintenance classique des composants du coeur du réacteur nucléaire et verrouillable par rapport au tubes de guidage, pour son maintien en position fixe, pendant le fonctionnement normal du réacteur.

On connaît des réalisations par exemple telles que décrites dans le EP-A 0 133 173 dans lesquelles la bague est maintenue dans une ouverture traversant la plaque d'extrémité du tube de guidage, de façon à être coaxiale à cette ouverture, grâce à des moyens d'accrochage manœuvrables et maintenus en place par un moyen élastique. La bague de guidage comporte un corps de forme tubulaire dont une première partie pénètre dans l'ouverture de la plaque d'éxtrémité du tube de guidage et une seconde partie qui vient en appui sur la face supérieure de cette plaque. Les moyens d'accrochage montés sur le corps tubulaire viennent en prise avec les bords de l'ouverture de la plaque, sur la face inférieure de celle-ci.

Le corps tubulaire de la bague de guidage est constitué par deux bagues coaxiales dont l'une, ou bague interne, est montée coulissante dans la direction axiale à l'intérieur de l'autre constituant la bague externe. L'alésage intérieur de la bague interne constitue la surface de guidage du prolongateur. La bague externe porte les moyens de verrouillage généralement constitués par des doigts d'accrochage montés pivotants autour d'axes horizontaux et la bague interne comporte sur sa surface extérieure des surfaces d'actionnement des doigts pivotants susceptibles de mettre ces doigts en position verrouillée ou déverrouillée, par déplacement axial de la bague interne. Un moyen élastique tel qu'un ressort est intercalé entre la bague externe et la bague interne de façon à exercer une force de rappel sur la bague interne, pour la maintenir dans la position correspondant au verrouillage des doigts.

De telles bagues de guidage présentent l'inconvénient d'être constituées de deux parties mobiles l'une par rapport à l'autre et de nécessiter l'utilisation d'un outillage spécial pour exercer une poussée sur la bague interne pour assurer le déverrouillage des doigts au moment de la mise en place de la bague de guidage sur la plaque d'extrémité d'un tube de guidage.

Le but de l'invention est donc de proposer un assemblage d'une bague de guidage sur une plaque la bague de guidage étant amovible et verrouillable dans une ouverture traversant ladite plaque, de façon que l'alésage interne de la bague de guidage et l'ouverture de la plaque soient coaxiaux et comportant un corps de forme tubulaire pénétrant par une première partie dans l'ouverture de la plaque et venant en appui, par une seconde partie, sur une des faces de la plaque autour de l'ouverture, des moyens d'accrochage de la bague sur les bords de l'ouverture, sur la face de la plaque opposée à la face d'appui du corps tubulaire, et un moyen élastique de rappel des moyens d'accrochage en position d'accrochage pour le verrouillage de la bague dans l'ouverture de la plaque, cette bague de guidage, de structure simple, devant comporter un corps tubulaire sans pièce mobile dont la mise en place et le verrouillage dans l'ouverture de la plaque peuvent être réalisés de façon simple et sans outillage spécial.

Dans ce but, les moyens d'accrochage sont constitués par au moins deux griffes ayant la forme d'un levier coudé présentant une première branche dont l'extrémité comporte une surface d'accrochage et une seconde branche faisant un certain angle avec la première, les griffes étant montées libres par rapport au corps tubulaire et maintenues dans ce corps tubulaire par le moyen élastique constitué par au moins un ressort intercalé entre une partie du corps tubulaire et la seconde branche des griffes montée avec un certain débattement axial dans le corps, de façon à repousser les extrémités d'accrochage des griffes dans la direction radiale, vers l'extérieur du corps tubulaire, à travers des ouvertures du corps.

Afin de bien faire comprendre l'invention, on va maintenant décrire, à titre d'exemple non limitatif, en se référant aux figures jointes en annexe, un mode de réalisation d'une bague de guidage selon l'invention appliqué à un tube de guidage d'un réacteur nucléaire à eau sous pression.

La figure 1 est une demi-vue en coupe par un plan vertical de la cuve et des équipements internes d'un réacteur nucléaire.

La figure 2 est une vue en élévation d'un ensemble de guidage d'une barre de commande et de son prolongateur.

La figure 3 est une vue en coupe par un plan de symétrie vertical d'une bague de guidage selon l'invention, en position verrouillée sur la plaque d'extrémité d'un tube de guidage.

La figure 4 est une demi-vue en coupe transversale de la partie du corps tubulaire de la bague de guidage engagée dans l'ouverture.

La figure 5 est une vue en coupe suivant V–V de la figure 4.

La figure 6 est une vue suivant F de la figure 5.

La figure 7 est une vue en perspective d'une griffe d'accrochage de la bague de guidage.

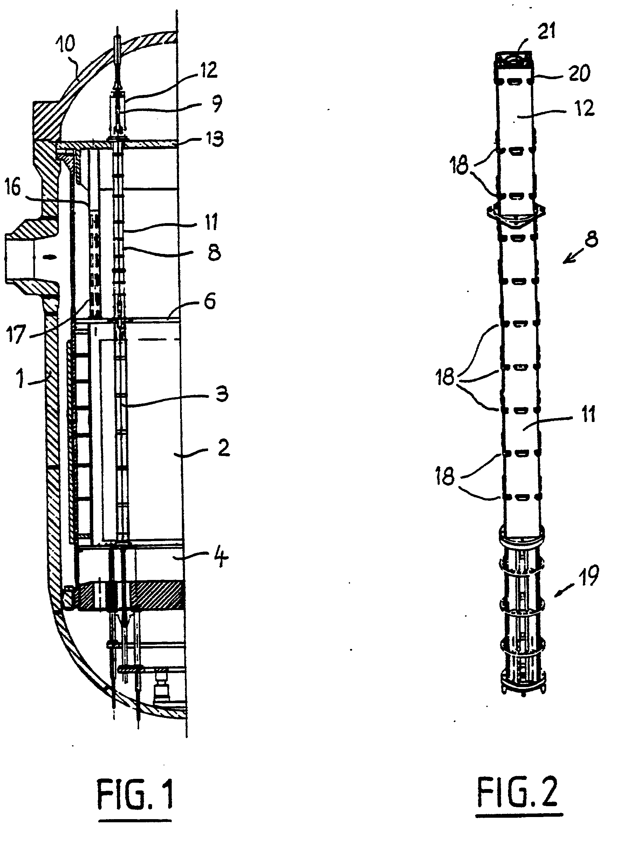

Sur la figure 1, on voit la cuve 1 d'un réacteur nucléaire à eau sous pression à l'intérieur de laquelle est disposé le cœur 2 du réacteur constitué par un ensemble d'assemblages combustibles 3 disposés verticalement et reposant sur la plaque inférieure de cœur 4 par l'intermédiaire de leur embout inférieur.

Au-dessus du cœur 2 est disposée la plaque supérieure de cœur 6 percée d'ouvertures au niveau de chacun des assemblages et sur laquelle reposent les tubes de guidage 8 placés à la verticale de certains des assemblages du coeur.

Au-dessus du couvercle hémisphérique 10 de la cuve 1 sont placés des mécanismes de déplacement, non représentés, des barres de commande en forme de grappe qui sont reliés à l'extrémité inférieure de tiges de commande 9 sur lesquelles s'exerce l'action des mécanismes de déplacement des barres de commande.

Les barres de commande peuvent se déplacer à l'intérieur des assemblages 3, dans des tubes remplaçant dans le réseau de ces assemblages certains crayons combustibles, de manière à assurer le contrôle de la réactivité du coeur 2.

Les tubes de guidage 8, comme on peut le voir plus en détail sur la figure 2, se composent d'une partie basse 11, appelée ci-après tube-guide, reposant sur une plaque support 13 parallèle à la plaque supérieure de coeur 6 et engagée dans la plaque de coeur 6 et d'une partie haute 12, appelée ci-après tube, fixée à la plaque support 13.

Les plaques support 6 et 13 sont reliées entre elles par des entretoises 16 tubulaires et percées d'ouvertures 17 pour la circulation du fluide de refroidissement constitué par de l'eau sous pression remplissant la cuve du réacteur. Grâce à ces entretoises 16, les équipements internes supérieurs forment un ensemble rigide solidaire de la plaque support 13.

A l'intérieur de chacun des tubes de guidage 8 et sur toute leur partie supérieure, sont placés des dispositifs de guidage discontinus constitués par des plaques perforées 18 régulièrement espacées suivant la longueur du tube-guide 11 et en partie basse du tube 12.

La partie inférieure 19 du tube-guide 11 constitue un dispositif de guidage continu des barres de commande dont les perforations sont dans le prolongement des perforations des dispositifs discontinus 18.

La partie 19 du tube-guide est constituée par des fourreaux occupant toute la hauteur de la zone 19 et comportant des canaux verticaux de guidage de la barre de commande. Cette zone 19, sans enveloppe tubulaire, permet ainsi à la majeure partie du fluide de refroidissement ayant traversé les assemblages combustibles 3 adjacents de se mélanger à la partie du fluide de refroidissement circulant par les ouvertures 17 afin d'être dirigée vers un générateur de vapeur non représenté.

Dans le cas où la zone 19 comporte une enveloppe tubulaire, il est évident que des ouvertures latérales seront pratiquées dans cette enveloppe, afin de permettre l'évacuation du fluide de refroidissement.

Les barres de commande sont constituées par une grappe de crayons absorbants reliés à leur partie supérieure par un croisillon ou araignée lui-même relié à la partie inférieure des tiges de commande du prolongateur 9.

A la partie supérieure du tube 12 est disposée une plaque 20 comportant une bague de guidage 21. Cette bague 21, comme expliqué ci-dessus, doit être amovible afin de permettre, lors des opérations de maintenance des équipements, le passage de la partie terminale du prolongateur 9 qui présente une section plus importante au niveau de sa liaison avec l'araignée des grappes.

Toutefois, en fonctionnement, cette bague 21 doit assurer le guidage du prolongateur 9, afin d'empêcher que ce dernier ne soit soumis à des déplacements latéraux importants qui risqueraient d'entraîner des mauvaises introductions des grappes de commande. La bague 21 doit de plus assurer un rôle de restricteur de débit afin d'empêcher que la partie du réfrigérant présente dans le tube de guidage 8 ne s'échappe dans l'espace compris entre la plaque supérieure 13 et le couvercle de cuve 10. La bague 21 doit donc être solidement verrouillée sur la plaque 20, à l'intérieur de son ouverture.

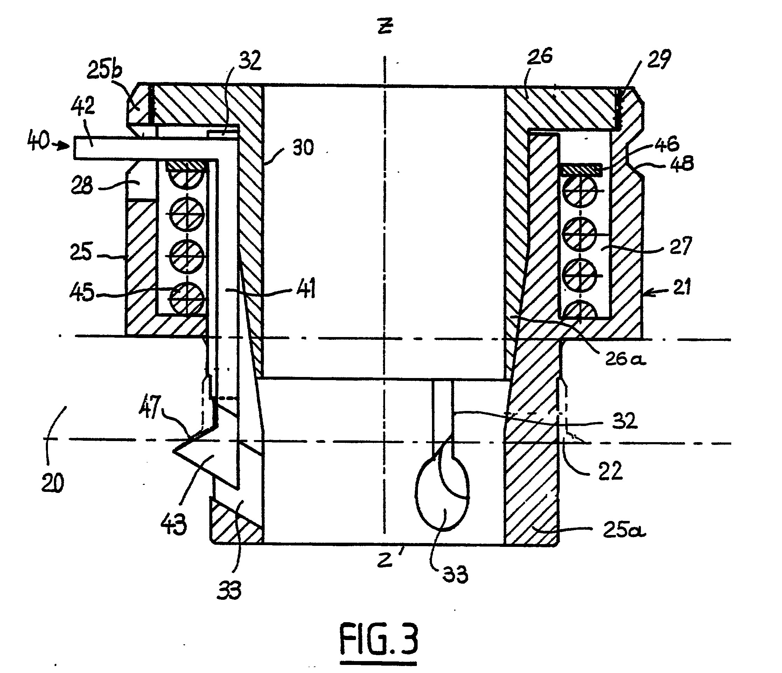

Sur la figure 3, on voit la bague de guidage 21 en position verrouillée à l'intérieur de l'ouverture 22 de la plaque d'extrémité 20 d'un tube 12.

Cette bague de guidage comporte un corps tubulaire 25 dont la partie inférieure 25a est engagée dans l'ouverture 22 et dont la partie supérieure 25b repose sur la face supérieure de la plaque 20.

Dans sa partie supérieure 25b, le corps tubulaire 25 comporte un évidement annulaire 27 et trois fenêtres 28 disposées à 120°, dont une seule a été représentée sur la figure 3.

Une pièce de fermeture 26 comportant un filetage externe vient se visser dans un taraudage 29 correspondant usiné sur la surface intérieure du corps tubulaire 25. Cette pièce de fermeture 26 fixée rigidement sur la partie 25b du corps tubulaire fait partie intégrante de la bague de guidage et comporte un alésage interne 30 assurant le guidage du prolongateur et la restriction du débit à la sortie du tube de guidage. La pièce 26 assure de plus la fermeture de l'évidement annulaire 27. La partie inférieure 26a de la pièce de fermeture et de guidage 26 comporte une surface tronconique venant en contact avec une surface tronconique correspondante usinée sur la surface intérieure du corps tubulaire 25, lorsque ces deux pièces sont assemblées rigidement. On obtient ainsi un parfait centrage de la pièce 26 dans le corps tubulaire 25 et donc dans l'ouverture 22 de la plaque 20 du tube 12. L'axe ZZ' de la bague de guidage est alors confondu avec l'axe de l'ouverture 22 qui est lui-même confondu avec l'axe du tube de guidage et de l'assemblage combustible correspondant.

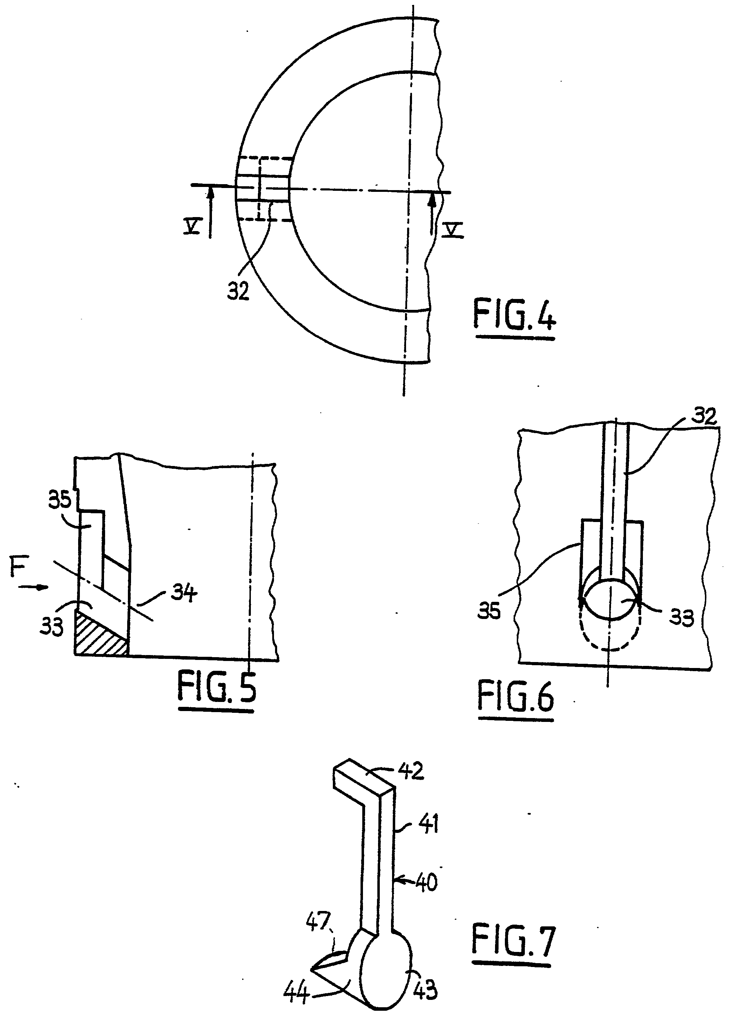

Comme il est visible sur la figure 3 ainsi que sur les figures 4, 5 et 6, la partie inférieure 25a du corps tubulaire comporte trois rainures 32 à 120° traversant sa paroi sur toute son épaisseur. Ces rainures 32 sont prolongées vers le haut du corps tubulaire 25, jusqu'à la partie supérieure de la paroi interne de l'évidement annulaire 27, pour déboucher dans ce évidement 27, chacune en face d'une fenêtre 28 traversant la paroi externe de l'évidement 27. Les rainures 32 débouchent chacune, à leur partie inférieure, dans une ouverture cylindrique 33 dont l'axe 34 est incliné par rapport à l'horizontale. L'ouverture cylindrique 33 débouche dans une lumière 35 de forme rectangulaire usinée dans la partie externe du corps tubulaire 25 sur une certaine hauteur et suivant une largeur correspondant au diamètre de l'ouverture cylindrique 33. Lorsque la bague de guidage 21 est en position dans l'ouverture 22 de la plaque 20, comme représenté sur la figure 3, l'ouverture cylindrique 33 débouche au niveau de la face inférieure de la plaque 20.

Dans chacune des cavités constituées par une ouverture cylindrique 33, une lumière 35, une rainure 32 et la fenêtre 28 correspondante, est disposée une griffe 40 telle que représentée sur la figure 7. La griffe 40 est réalisée sous la forme d'un levier coudé comportant une première branche 41 terminée par un épanouissement 43 et une seconde branche 42 faisant un angle de 90° avec la branche 41.

L'épanouissement 43 comporte une partie cylindrique 44 dont le diamètre correspond au diamètre de l'ouverture cylindrique 33 et dont l'axe est incliné par rapport à l'horizontale et par rapport à la branche 41 du levier coudé. Cette partie cylindrique 44 se termine par un biseau 47 à surface convexe constituant la surface d'appui et d'accrochage de la griffe 40. La surface convexe 47 coopère parfaitement par sa forme avec le profil de la surface inférieure du trou 22.

On peut voir sur la figure 3 que la branche 41 de la griffe est engagée, en position de service, dans une rainure 32, la branche 42 traversant la fenêtre 28 correspondante et étant saillante à l'extérieur du corps tubulaire 25 de la bague de guidage.

Les griffes 40 sont montées entièrement libres à l'intérieur du corps tubulaire 25 et sont maintenues en place dans ce corps tubulaire par un ressort hélicoïdal 45, en appui à l'une de ses extrémités sur le fond de l'évidement annulaire 27 du corps tubulaire 25 et par son autre extrémité sur les branches 42 des griffes 40, par l'intermédiaire d'une bague d'appui 46. Le ressort 45 est précontraint au montage de façon à appliquer une force verticale dirigée vers le haut sur les branches 42 des griffes 40, afin de les rappeler dans une position haute où l'épanouissement 43 de la griffe et sa surface 47 sont saillants vers l'extérieur par rapport à la surface externe de la partie inférieure 25a du corps tubulaire 25.

En particulier, lorsque la bague de guidage est en place dans l'ouverture 22, comme représenté sur la figure 3, le ressort permet le verrouillage de la griffe en position d'accrochage par sa surface 47 sur le bord inférieur de l'ouverture 22 présentant une portée tronconique.

Dans cette position de verrouillage, la partie cylindrique 44 de l'épanouissement 43 pénètre partiellement dans la lumière 35 dans laquelle débouche l'ouverture cylindrique 33.

Le déverrouillage de la bague 21 peut être obtenu par une simple poussée de haut en bas, sur l'extrémité des branches 42 des griffes 40. Le ressort 45 est alors comprimé et l'épanouissement terminal 43 de la griffe 40 est déplacé vers le bas, de telle sorte que la surface 47 est séparée de la surface correspondante de la plaque 20. Par effet de levier, l'appui étant réalisé sur la bague 46 à l'extrémité du ressort 45, la griffe 40 pivote de façon que l'épanouissement 43 soit déplacé vers l'intérieur du corps tubulaire 25. Ce pivotement est possible dès que la partie cylindrique 44 de l'épanouissement 43 parvient au niveau de l'ouverture cylindrique 33. La griffe peut être alors entièrement rétractée à l'intérieur de la paroi 25a du corps tubulaire 25, à l'intérieur de l'ouverture 33, grâce à la présence de la surface tronconique 26a permettant le basculement par pivotement de la griffe 40.

La bague de guidage 21 peut alors être extraite de l'ouverture 22 de la plaque 20 du tube 12. Le ressort est maintenu en compression grâce à un outil de serrage introduit dans une gorge 48 permettant également la préhension de la bague de guidage pour son extraction ou sa remise en place dans l'ouverture 22.

Il est à remarquer qu'en position de verrouillage telle que représentée sur la figure 3, les griffes 40 ne peuvent se déplacer dans la direction radiale, une partie de l'épanouissement 43 étant alors engagée dans la lumière 35 dans laquelle débouche la rainure 32 dont la dimension transversale est inférieure à la dimension transversale de l'épanouissement 43. Le déverrouillage ne peut se produire que par déplacement vers le bas de la griffe 40, à l'encontre de la force exercée par le ressort 45.

Lorsque la bague 21 a été déverrouillée, les griffes 40 sont rappelées dans leur position haute inactive, dans laquelle les branches 42 viennent en appui, sous l'effet du ressort 45, sur le bord supérieur des fenêtres 28 correspondantes et sous le rebord supérieur de la pièce de fermeture 26.

Pour la mise en place et le verrouillage de la bague 21 dans l'ouverture 22 d'une plaque 20, les griffes 40 sont préalablement rétractées en exerçant une poussée sur l'extrémité des branches 42 et en maintenant le ressort 45 comprimé, grâce à un outil de préhension introduit dans la gorge 48. La partie 25a du corps tubulaire 25 est introduite dans l'ouverture 22, l'épaulement de la partie 25b de ce corps tubulaire venant en appui sur la surface supérieure de la plaque 20. On relâche alors l'extrémité des branches 42 des griffes 40 qui sont alors repoussées vers le haut par le ressort 45 qui provoque également le basculement de ces griffes de façon que l'épanouissement terminal 43 soit repoussé vers l'extérieur et que sa surface 47 vienne en contact avec le bord de l'ouverture 22. La bague de guidage 21 est alors de nouveau dans sa position de verrouillage représentée sur figure 3.

Il est également possible d'effectuer l'introduction et le verrouillage de la bague de guidage 21 sans avoir rétracté préalablement les griffes 40. La bague de verrouillage est amenée en position sur l'ouverture 22, la surface inférieure des épanouissements 43 venant en appui sur le bord supérieur de l'ouverture 22. On exerce alors une poussée sur l'extrémité des branches 42 des griffes 40 de façon à comprimer le ressort 45 et à déplacer l'extrémité terminale des griffes vers l'intérieur. On réalise ainsi l'encliquetage et le verrouillage de la bague 21.

Les principaux avantages de l'invention apparaissent dans la description qui précède : le dispositif est particulièrement simple, son corps tubulaire ne comporte pas de partie mobile et les opérations de verrouillage et de déverrouillage sont particulièrement simples à réaliser.

L'invention ne se limite pas au mode de réalisation qui a été décrit.

C'est ainsi qu'on peut imaginer des griffes et un corps tubulaire d'une forme différente de celle qui a été décrite, l'angle des branches du levier constituant la griffe pouvant être différent de 90° et la forme de la partie terminale d'accrochage différente de celle qui a été décrite. De même, le corps tubulaire peut comporter des lumières et des ouvertures d'une forme différente adaptée à la forme des griffes utilisées. On peut utiliser un seul ressort commun à l'ensemble des griffes ou, au contraire, plusieurs dispositifs élastiques tels que des ressorts associés à chacune des griffes.

Le nombre de griffes peut être différent de trois mais ce nombre doit cependant être au moins égal à deux.

La structure de la bague de guidage peut être différente de celle qui a été décrite qui comportait une pièce de fermeture 26 vissée sur le corps tubulaire 25, cette pièce 26 permettant de monter facilement les griffes et le ressort de poussée à l'intérieur d'un évidement annulaire 27 du corps tubulaire 25. On pourrait tout aussi bien concevoir une pièce de fermeture qui serait soudée sur le corps tubulaire après montage du ressort et des griffes. On pourrait également imaginer une pièce tubulaire comportant un ou plusieurs évidements pour des ressorts en appui sur les griffes, d'une forme différente d'un évidement annulaire.

Enfin, la bague de guidage suivant l'invention peut être utilisée dans d'autres applications que celle relative à un tube de guidage d'un réacteur nucléaire à eau sous pression.

**Revendications**

1. Assemblage d'une bague de guidage sur une plaque la bague de guidage étant amovible et verrouillable dans une ouverture (22) traversant ladite plaque (20), de façon que l'alésage interne (30) de la bague de guidage et l'ouverture (22) de la plaque (20) soient coaxiaux et comportant un corps (25) de forme tubulaire pénétrant par une première partie (25a) dans l'ouverture (22) de la plaque (20) et venant en appui par une seconde partie (25b) sur une des faces de la plaque (20), autour de l'ouverture (22), des moyens d'accrochage (40) de la bague (21) sur les bords de l'ouverture (22), sur la face de la plaque (20) opposée à la face d'appui du corps tubulaire (25) et un moyen élastique (45) de rappel des moyens d'accrochage (40) en position d'accrochage pour le verrouillage de la bague (21) dans l'ouverture de la plaque (20), caractérisée par le fait:

   – que les moyens d'accrochage (40) sont constitués par au moins deux griffes ayant la forme d'un levier coudé présentant une première branche (41) dont l'extrémité comporte une surface d'appui et d'accrochage (47) et une seconde branche (42) faisant un certain angle avec la première, les griffes (40) étant montées libres par rapport au corps tubulaire (25) et maintenues dans ce corps tubulaire (25) par le moyen élastique (45) constitué par au moins un ressort intercalé entre une partie du corps tubulaire (25) et la seconde branche (42) des griffes (40) montée avec un certain débattement axial dans le corps (25), de façon à repousser les extrémités d'accrochage (43) des griffes (40) dans la direction radiale, vers l'extérieur du corps tubulaire (25), à travers des ouvertures (33) du corps (25).

2. Assemblage suivant la revendication 1, caractérisée par le fait que la paroi du corps tubulaire (25) est traversée, d'une part dans sa première partie (25a) par au moins deux ouvertures (33) communiquant avec des rainures (32) en direction de la seconde partie (25b) dont la paroi est traversée par au moins deux fenêtres (28) dans des positions correspondant aux rainures (32), de façon à disposer une griffe (40) dans chacun des ensembles d'ouvertures (33, 32, 28), la première branche (41) de la griffe (40) étant disposée dans la rainure (32) et la seconde branche (42) traversant la fenêtre (28) pour venir en saillie dans la direction radiale, à l'extérieur du corps tubulaire (25).

3. Assemblage suivant la revendication 2, caractérisée par le fait que les rainures (32) débouchent dans la seconde partie (25b) du corps tubulaire (25), dans un logement annulaire (27) renfermant le ressort (45).

4. Assemblage suivant la revendication 3, caractérisée par le fait qu'elle comporte de plus une pièce (26) fixée rigidement sur le corps tubulaire (25) pour fermer le logement annulaire (27) renfermant le ressort (45).

5. Assemblage suivant l'une quelconque des revendications 2, 3 et 4, caractérisée par le fait que l'ouverture (33) traversant la paroi de la première partie (25a) du corps tubulaire (25) a la forme d'un cylindre dont l'axe (34) est incliné par rapport à la section droite de la bague de guidage et communique, du côté de la surface externe de la première partie (25a) du corps tubulaire (25) avec une lumière de forme rectangulaire (35) de direction axiale, dont la largeur est égale au diamètre de l'ouverture cylindrique (33), la partie d'extrémité (43) de la griffe (40) ayant une forme cylindrique et des dimensions correspondant à celles de l'ouverture (33), de façon que, sous l'action du ressort (45), la partie terminale d'accrochage (43) de la griffe (40) soit introduite dans la lumière (35) où elle est en butée radiale, dans la position de verrouillage de la bague de guidage.

6. Assemblage selon la revendication 5, caractérisée par le fait que la partie terminale d'accrochage (43) comporte une surface d'appui et d'accrochage (47) de forme convexe de façon à coopérer parfaitement avec le profil de la surface inférieure de la plaque (20).

7. Assemblage suivant l'une quelconque des revendications 1 à 6, caractérisée par le fait que les branches (41) et (42) du griffes (40) font un angle voisin de 90°C.

8. Utilisation d'un assemblage d'une bague de guidage sur une plaque suivant l'une quelconque des revendications 1 à 7, caractérisée par le fait que la plaque (20) est une plaque d'extrémité d'un tube de guidage d'une barre de commande d'un réacteur nucléaire à eau sous pression.

**Patentansprüche**

1. Zusammenbau eines Führungsrings auf einer Platte, wobei der Führungsring abnehmbar und in einer Öffnung (22) verriegelbar ist, die die Platte (20) durchquert, derart, daß die innere Bohrung (30) des Führungsrings und die Öffnung (22) der Platte (20) koaxial verlaufen und einen rohrförmigen Körper (25) aufweist, der mit einem ersten Teil (25a) in die Öffnung (22) der Platte (20) eindringt und mit einem zweiten Teil (25b) auf einer der Seiten der Platte (20) um die Öffnung (22) herum aufliegt, wobei Klemmvorrichtungen (40) des Rings (21) an den Rändern der Öffnung (22) auf der Fläche der Platte (20) gegenüber der Auflagefläche des rohrförmigen Körpers (25) und ein elastisches Rückholorgan (45) der Klemmvorrichtung (40) in eine Klammerstellung zur Verriegelung des Rings (21) in der Öffnung der Platte (20) vorgesehen ist, dadurch gekennzeichnet, daß

– die Verriegelungsvorrichtung (40) aus mindestens zwei Keilen besteht, die die Form eines geknickten Hebels aufweisen und einen ersten Schenkel (41) aufweisen, dessen Ende eine Auflage und Kreisfläche (47) aufweist, und ein zweiter Schenkel (42), der mit dem ersten einen vorbestimmten Winkel einnimmt, wobei die Krallen (40) bezüglich des rohrförmigen Körpers (25) frei beweglich angeordnet sind und im rohrförmigen Körper (25) über das elastische Organ (45) gehalten werden, die aus mindestens einer Feder bestehen, die zwischen einem Teil des rohrförmigen Körpers (25) und dem zweiten Schenkel (42) der Krallen (40) angeordnet ist und mit einem bestimmten axialen Federweg in dem Körper (25) derart befestigt ist, daß er die Verkrallungsenden (43) der Krallen (40) in Radialrichtung zum Äußeren des rohrförmigen Körpers (25) durch die Öffnungen (33) des Körpers (25) drückt.

2. Zusammenbau nach Anspruch 1, dadurch gekennzeichnet, daß die Wand des rohrförmigen Körpers (25) einerseits in seinem ersten Teil (25a) von mindestens zwei Öffnungen (33) durchquert wird, die mit Nuten (32) in Richtung auf den zweiten Teil (25b) in Verbindung stehen, wobei die Wandung des zweiten Teils (25b) von mindestens zwei Fenstern (28) in Positionen, die denen der Nuten (32) entsprechen, durchstoßen ist, derart, daß eine Kralle (40) in jeder der Gruppe von Öffnungen (33, 32, 28) angeordnet ist, wobei der erste Schenkel (41) der Kralle (40) in der Nut (32) angeordnet ist und der zweite Schenkel (42) das Fenster (28) durchquert, um in Radialrichtung außen vor dem rohrförmigen Körper (25) vorzustehen.

3. Zusammenbau nach Anspruch 2, dadurch gekennzeichnet, daß die Nuten (32) in dem zweiten Teil (25b) des rohrförmigen Körpers (25) in einen ringförmigen Sitz (27) münden, der die Feder (45) einschließt.

4. Zusammenbau nach Anspruch 3, gekennzeichnet durch ein starr am rohrförmigen Körper (25) befestigtes Teil (26), das den ringförmigen Sitz (27), der die Feder (45) aufnimmt, abschließt.

5. Zusammenbau nach einem der Ansprüche 2, 3 und 4, dadurch gekennzeichnet, daß die die Wand des ersten Teils (25a) des rohrförmigen Körpers (25) durchquerende Öffnung (33) zylinderförmig ist, wobei deren Achse (34) gegenüber dem Querschnitt des Führungsrings geneigt ist und auf der Seite der äußeren Oberfläche des ersten Teils (25a) des rohrförmigen Körpers (25) mit einer rechteckigen Öffnung (35) axialer Ausrichtung mündet, dessen Breite gleich dem Durchmesser der zylinderförmigen Öffnung (33) entspricht und der Endteil (43) der Kralle (40) zylinderförmig ist und Abmessungen aufweist, die denen der Öffnung (33) entsprechen, derart, daß unter Einwirkung der Feder (45) der Verkrallungsendteil (43) der Kralle (40) in die Öffnung (35) eingeführt ist, wo diese in der Verriegelungsstellung des Führungsrings einrastet.

6. Zusammenbau nach Anspruch 5, dadurch gekennzeichnet, daß der Verkrallungsendteil (43) eine Fläche zur Auflage und Verkrallung (47) in konvexer Form aufweist, derart, daß diese genau mit dem Profil der inneren Oberfläche der Platte (20) zusammenwirkt.

7. Zusammenbau nach einem der Ansprüche 1–6, dadurch gekennzeichnet, daß die Schenkel (41) und (42) der Krallen (40) nahe 90° einschließen.

8. Verwendung eines Zusammenbaus eines Führungsrings auf einer Platte nach einem der Ansprüche 1–7, dadurch gekennzeichnet, daß die Platte (20) eine Endplatte eines Führungsrohrs eines Steuerstabs eines Hochwasserkernreaktors ist.

**Claims**

1. Assembly of a guide ring on a plate, the guide ring being removable and lockable in an orifice (22) passing through the plate (20), so that the internal bore (30) of the guide ring and the orifice (22) in the plate (20) are coaxial relative to one another, and comprising a tubular body (25) entering the orifice (22) in the plate (20) by means of a first part (25a) and coming up against one of the faces of the plate (20) round the orifice (22) by means of a second part (25b), means (40) for attaching the ring (21) to the edges of the orifice (22) on the face of the plate (20) opposite the bearing face of the tubular body (25), and resilient means (45) for returning the attachment means (40) into the attachment position for locking the ring (21) in the orifice in the plate (20), characterized in that the attachment means (40) consists of at least two claws taking the form of an angled lever having a first arm (41), the end of which has a bearing and attachment surface (47), and a second arm (42) forming a certain angle relative to the first arm, the claws (40) being mounted freely relative to the tubular body (25) and being held in this tubular body (25) by the resilient means, (45) consisting of at least one spring inserted between one part of the tubular body (25) and the second arm (42) of the claws (40), this arm (42) being mounted with a degree of axial mobility in the body (25), so as to push the attachment ends (43) of the claws (40) in the radial direction towards the outside of the tubular body (25), through openings (33) in the body (25).

2. Assembly according to claim 1, characterised in that the wall of the tubular body (25) has passing through it, on the one hand in its first part (25a), at least two openings (33) communicating with grooves (32) in the direction of the second part (25b), the wall of which has at least two ports (28) passing through it in positions corresponding to the grooves (32), so that a claw (40) is disposed in each of the sets or openings (33, 32, 28), the first arm (41) of the claw (40) being arranged in the groove (32), and the second arm (42) passing through the port (28) so as to project radially outside the tubular body (25).

3. Assembly according to claim 2, characterised in that the grooves (32) open into the second part (25b) of the tubular body (25) in an annular recess (27) containing the spring (45).

4. Assembly according to claim 3, characterised in that it also has a piece (26) fastened rigidly to the tubular body (25) to close off the annular housing (27) containing the spring (45).

5. Assembly according to any one of claims 2, 3 and 4, characterised in that the opening (33) passing through the wall of the first part (25a) of the tubular body (25) has the form of a cylinder, the axis (34) of which is inclined relative to the cross-section of the guide ring, and, on the same side as the outer surface of the first part (25a) of the tubular body (25), communicates with an axially directed rectangular slot (35) the width of which is equal to the diameter of the cylindrical aperture (33), the end part (43) of the claw (40) having a cylindrical form and dimensions corresponding to those of the aperture (33), so that, under the action of the spring (45), the end attachment part (43) of the claw (40) is introduced into the slot (35), where it is in radial abutment, in the locking position of the guide ring.

6. Assembly according to claim 5, characterised in that the end attachment part (43) has bearing and attachment surface (47) of convex form, so as to interact perfectly with the profile of the lower surface of the plate (20).

7. Assembly according to any one of claims 1 to 6, characterised in that the arms (41) and (42) of the claws (40) form an angle of approximately 90°.

8. Use of assembly of a guide ring on a plate according to any one of claims 1 to 7, characterised in that the plate (20) is an end plate of a guide tube of a control rod of a pressurized-water nuclear reactor.

FIG.1

FIG.2

FIG.3

EP 0 238 767 B1

32

**FIG.4**

35

F →

34

33

**FIG.5**

32

35

33

**FIG.6**

42

41

40

47

44    43

**FIG.7**